# FASCICULE DE BREVET EUROPEEN

(11) **EP 3 976 358 B1**
(45) Date de publication et mention de la délivrance du brevet: **12.07.2023**
(21) Numéro de dépôt: 20728698.0
(22) Date de dépôt: 21.05.2020
(51) Int. Cl.: B29C 70/34, B29C 31/08, B29C 43/36, B29C 53/36, B29C 70/46, B29C 70/54, B29D 99/00, B29C 31/00

(54) **PROCEDE ET DISPOSITIF DE FABRICATION D'UN PROFILE EN MATERIAU COMPOSITE DONT LA SECTION PRESENTE TROIS BRANCHES**
VERFAHREN UND VORRICHTUNG ZUR HERSTELLUNG EINES PROFILELEMENTS AUS VERBUNDSTOFFMATERIAL, DESSEN QUERSCHNITT DREI ABZWEIGUNGEN AUFWEIST
METHOD AND DEVICE FOR MANUFACTURING A PROFILE MEMBER OF COMPOSITE MATERIAL, THE CROSS-SECTION OF WHICH HAS THREE BRANCHES

(30) Priorité: 28.05.2019 FR 1905615
(43) Date de publication de la demande: 06.04.2022
(73) Titulaire: LATECOERE, 31500 Toulouse (FR)
(72) Inventeur: KRENA, Josef, 28922 LYSA NAD LABEM (CZ); KLISKY, Miloslav, 18200 PRAHA 8 (CZ)
(74) Mandataire: Junca, Eric
(86) Numéro de dépôt international: PCT/EP2020/064233
(87) Numéro de publication internationale: WO 2020/239611

(56) Documents cités:
- EP-A2- 1 481 790
- WO-A1-2014/200675
- US-A1- 2018 001 578

## Description

### DOMAINE TECHNIQUE

L'invention concerne le domaine des matériaux composites et plus particulièrement les procédés et dispositifs permettant de fabriquer des profilés dont la section présente trois branches. Les profilés dont la section présente trois branches sont des profilés bien connus pour leur rigidité et leur utilisation dans un grand nombre d'applications. Les profilés dont la section présente trois branches sont des profilés dont la section présente un point central de jonction ainsi que trois branches qui partent de ce point de jonction. Les profilés dont la section présente trois branches incluent, par exemple, les profilés dont la section est en forme de T ou en forme de Y.

### ART ANTÉRIEUR

Dans l'art antérieur, la fabrication des profilés en matériau composite dont la section présente trois branches est généralement réalisée en plusieurs étapes. Par exemple, deux profilés dont la section présente deux branches sont tout d'abord réalisés. Ces profilés dont la section présente deux branches sont par exemple des profilés dont la section est en forme de L. Ces profilés sont facilement réalisables par des procédés simples et connus dans le domaine des matériaux composites. Ces deux profilés sont ensuite réunis par collage l'un contre l'autre de manière à former un seul profilé dont la section présente trois branches. Par exemple, deux profilés en L sont fabriqués puis sont ensuite réunis par collage pour former un profilé en T.

Les procédés de l'art antérieur comportent généralement un nombre d'étapes important et sont donc coûteux. Ces procédés nécessitent de plus plusieurs postes de travail différents et impliquent donc un déplacement et une reprise des pièces entre les différents postes de travail ce qui ne permet pas, ou qui rend difficile, la réalisation de pièces de précision. Par ailleurs, les procédés de l'art antérieur aboutissent à des pièces hétérogènes dont la résistance peut être améliorée.

EP1481790A2 divulgue un procédé de fabrication d'un profilé en matériau composite dont la section présente trois branches.

### EXPOSÉ DE L'INVENTION

L'invention a pour but d'améliorer les procédés et dispositifs de l'art antérieur.

À cet effet, l'invention vise un procédé de fabrication d'un profilé en matériau composite dont la section présente trois branches, ce procédé comportant les étapes suivantes :
- rapprocher l'un de l'autre deux rebords opposés d'un panneau de matériau en feuille, de sorte que ces deux rebords opposés soient juxtaposés le long d'une direction de juxtaposition ;
- déplacer en translation une paire de mâchoires dans une direction perpendiculaire à la direction de juxtaposition, de sorte que la paire de mâchoires se place de part et d'autre desdits rebords opposés juxtaposés, ce déplacement en translation de la paire de mâchoires étant réalisé en direction d'un socle ;
- presser simultanément le matériau en feuille entre les deux mâchoires d'une part et entre les mâchoires et le socle d'autre part ;
- finaliser le profilé en matériau composite par durcissement d'une matrice imprégnant le matériau en feuille.

Un autre objet de l'invention vise un dispositif de fabrication d'un profilé en matériau composite dont la section présente trois branches, ce dispositif comportant :
- un châssis de support pour un panneau de matériau en feuille, ce châssis de support comportant :
   - un cadre rigide présentant une ouverture centrale pour un panneau de matériau en feuille ;
   - deux organes de maintien adaptées à saisir deux rebords opposés d'un panneau de matériau en feuille ;
   - deux leviers supportant chacun un des organes de maintien, ces leviers étant montés pivotants sur le cadre rigide entre une position de déploiement où les organes de maintien sont écartés l'un de l'autre, et une position de repli où les organes de maintien sont juxtaposés le long d'une direction de juxtaposition ;
- un moule muni de deux mâchoires mobiles l'une par rapport à l'autre entre une position écartée et une position resserrée ;
- un contre-moule muni d'un socle ;
   le châssis de support étant adapté à occuper une position de travail dans laquelle il est disposé entre le moule et le contre-moule,
   le moule et le contre-moule étant mobiles l'un par rapport à l'autre, selon une direction de translation qui est perpendiculaire à la direction de juxtaposition, entre une position d'éloignement mutuel et une position de serrage où les mâchoires du moule sont en position resserrée et sont disposées en vis-à-vis du socle du contre-moule.

L'invention permet la réalisation d'un profilé en matériau composite dont la section présente trois branches en un nombre très réduit d'étapes et la mise en forme a lieu au sein d'un seul poste de travail, ce qui permet de réduire les coûts de production, d'augmenter la productivité ou les cadences de production, et de produire des pièces plus précises grâce à une seule opération de mise en forme à l'issue de laquelle la pièce finale est obtenue.

Dans un cas particulièrement avantageux de mise en oeuvre de l'invention, le profilé est réalisé à partir d'un seul panneau de matériau en feuille constitué d'une ou plusieurs feuilles de pré-imprégné, préalablement chauffé. Dans ce cas, la réalisation du profilé, après réchauffement du panneau, est réalisée en une seule étape dont la durée est de l'ordre de quelques minutes.

L'invention permet d'obtenir un profilé homogène dont la section présente trois branches dont la constitution est identique. Ces branches présentent toutes une position optimale des couches de matériau en feuille du point de vue de l'orientation des fibres. Une telle réalisation aboutit à un profilé particulièrement solide, durable et stable dans le temps, et ne nécessite aucun insert de renfort.

L'invention permet la réalisation de différentes formes possibles de profilé dont la section présente trois branches et le dispositif selon l'invention peut être modifié facilement pour obtenir une forme de profilé différente par simple changement de la paire de mâchoires et du socle. Le procédé est ainsi flexible et adaptable à moindre cout.

Le procédé de fabrication peut comporter les caractéristiques additionnelles suivantes, seules ou en combinaison :
- le procédé comporte, avant l'étape de rapprocher l'un de l'autre deux rebords opposés d'un panneau de matériau en feuille, une étape de fixation d'un organe de maintien sur chacun desdits rebords opposés du panneau de matériau en feuille ;
- l'étape de rapprocher l'un de l'autre deux rebords opposés du panneau de matériau en feuille est réalisée par le rapprochement des organes de maintien et leur passage d'une position de déploiement à une position de repli ;
- le procédé comporte une étape de superposition de feuilles de matériau en feuille pour constituer le panneau de matériau en feuille entre les deux organes de maintien lorsqu'ils sont en position de déploiement ;
- le procédé comporte, avant l'étape de rapprocher l'un de l'autre deux rebords opposés d'un panneau de matériau en feuille, une étape de réchauffement du panneau de matériau en feuille, le panneau étant constitué de feuilles de pré-imprégné ;
- le procédé comporte, avant l'étape de rapprocher l'un de l'autre deux rebords opposés d'un panneau de matériau en feuille, une étape de disposer le panneau de matériau en feuille entre la paire de mâchoires et le socle ;
- l'étape de rapprocher l'un de l'autre deux rebords opposés d'un panneau de matériau en feuille est réalisée durant une première phase de rapprochement de la paire de mâchoires du socle, par l'action de tiges d'activation fixes par rapport au socle ;
- dans l'étape de presser simultanément le matériau en feuille entre les deux mâchoires d'une part et entre les mâchoires et le socle d'autre part, le matériau en feuille est pressé entre deux surfaces parallèles entre elles des mâchoires, et le matériau en feuille est simultanément pressé entre le socle et deux surfaces perpendiculaires aux surfaces parallèles des mâchoires ;
- lors de l'étape de presser simultanément le matériau en feuille entre les deux mâchoires d'une part et entre les mâchoires et le socle d'autre part, le matériau en feuille est pressé contre une nervure située sur le socle et formant un décrochement dans le matériau en feuille ;
- lorsque les deux rebords opposés du panneau de matériau en feuille sont juxtaposés le long d'une direction de juxtaposition, la position de ces rebords est déterminée par des butées réglables ;
- durant l'étape de déplacer en translation une paire de mâchoires dans une direction perpendiculaire à la direction de juxtaposition, les mâchoires sont simultanément rapprochées l'une de l'autre par la coopération d'arêtes obliques solidaires des mâchoires et de plaquettes obliques fixes par rapport au socle ;
- les mâchoires sont sollicitées vers leur position d'écartement par des ressorts de rappel.

Le dispositif de fabrication peut comporter les caractéristiques additionnelles suivantes, seule ou en combinaison :
- les organes de maintien sont des pinces formées chacune de deux mors et comportant un moyen de serrage ;
- les deux mors sont des barres ;
- les deux mors comportent des aiguilles s'étendant entre les deux mors ;
- chaque levier comporte deux bras parallèles entre eux, chaque bras étant relié au cadre rigide par un pivot et les deux bras d'un même levier étant reliés ensemble par une tringle, chaque organe de maintien étant monté sur une de ces tringles ;
- chaque organe de maintien est relié au levier correspondant par une liaison pivot autour d'un axe parallèle à la direction de juxtaposition ;
- le cadre rigide comporte des butées pour les leviers en position de déploiement ;
- le cadre rigide comporte un support central muni de butées réglables déterminant la position de repli des leviers ;
- le cadre rigide comporte des pattes de fixation pour sa fixation sur des moyens de translation ;
- le cadre rigide est fixé sur des moyens de translation selon deux directions perpendiculaires à la direction de juxtaposition ;
- le moule comporte un bâti sur lequel sont montées mobiles en translation les deux mâchoires ;
- les mâchoires sont sollicitées vers leur position écartées par des ressorts de rappel ;
- les mâchoires comportent chacune une cavité de contournement des organes de maintien lorsque le moule et le contre-moule sont dans leur position de serrage ;
- les mâchoires comportent des arêtes obliques et le contre-moule comporte un organe de rapprochement muni de plaquettes obliques, les arêtes obliques coopérant avec les plaquettes obliques pour resserrer les mâchoires lorsque le moule et le contre-moule sont translatés en direction de leur position de serrage ;
- chaque mâchoire comporte une première surface, les deux premières surfaces des mâchoires étant parallèles, situées en vis-à-vis l'une de l'autre et adaptées à serrer entre elles un panneau de matériau en feuille lorsque les mâchoires sont dans leur position resserrée ;
- chaque mâchoire comporte une deuxième surface perpendiculaire à la première surface, les deuxièmes surfaces des deux mâchoires étant adaptées à serrer entre elles et le socle un panneau de matériau en feuille lorsque le moule et le contre-moule sont dans leur position de serrage ;
- le contre-moule comporte un bâti sur lequel le socle est monté de manière amovible ;
- le contre-moule comporte une nervure fixée sur le socle et adaptée à former un décrochement ;
- le châssis de support comporte des moyens élastiques à genouillère sollicitant les leviers vers l'une ou l'autre des positions de déploiement et de repli ;
- le contre-moule comporte des tiges d'activation sollicitant les leviers de leur position de déploiement vers leur position de repli lorsque le moule et le contre-moule sont translatés en direction de leur position de serrage ;
- le châssis de support présente : une position de travail dans laquelle il est disposé entre le moule et le contre-moule ; et une position de préparation où il est à l'écart de l'espace entre le moule et le contre-moule.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente le châssis de support, en position de déploiement, d'un dispositif de fabrication selon un mode de réalisation de l'invention ;
[Fig.2] La figure 2 représente le châssis de support de la figure 1, en position de repli ;
[Fig.3] La figure 3 représente le moule et le contre-moule d'un dispositif de fabrication selon un mode de réalisation de l'invention ;
[Fig.4] La figure 4 représente le châssis de support de la figure 1, ainsi que le moule et le contre-moule de la figure 3 ;
[Fig.5] La figure 5 représente l'ensemble de la figure 4 dans lequel le châssis de support est en position de repli ;
[Fig.6] La figure 6 représente une étape du procédé de fabrication selon un mode de réalisation de l'invention ;
[Fig.7] La figure 7 représente une autre étape du procédé de fabrication selon un mode de réalisation de l'invention ;
[Fig.8] La figure 8 représente une autre étape du procédé de fabrication selon un mode de réalisation de l'invention ;
[Fig.9] La figure 9 représente un profilé dont la section présente trois branches, obtenu selon l'invention.

### DESCRIPTION DÉTAILLÉE

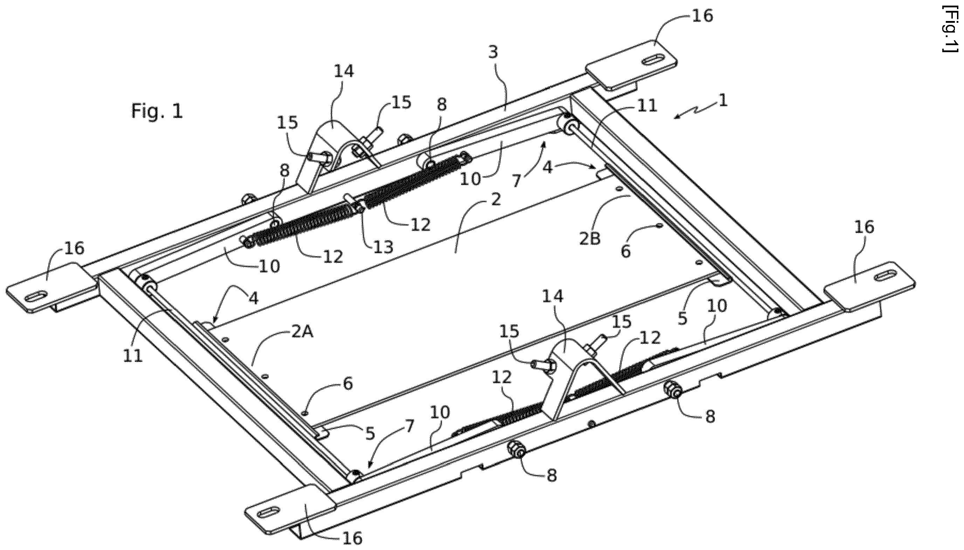

Un mode de réalisation d'un procédé de fabrication mis en oeuvre avec un dispositif de fabrication va être décrit en référence aux figures 1 à 8. Ce procédé et ce dispositif permettent la fabrication d'un profilé en matériau composite dont la section présente trois branches.

La figure 1 représente un châssis de support 1 qui est l'un des éléments constituant un dispositif de fabrication selon l'invention. Le châssis de support 1 est prévu pour supporter et manipuler un panneau 2 de matériau en feuille. Le panneau 2 est une matière première en forme de plaque dont les dimensions sont adaptées à la réalisation de la pièce finale. Ce panneau 2 de matériau en feuille est destiné à constituer le renfort du profilé en cours de fabrication, ce renfort étant imprégné d'une matrice (par exemple une résine) pour constituer la pièce finale en matériau composite. Le panneau 2 de matériau en feuille est choisi en fonction du type de renfort souhaité pour le matériau composite de la pièce finale. Le panneau 2 comporte généralement une ou plusieurs feuilles de renfort pour matériau composite telles que des feuilles de fibre de verre ou de carbone, tissées ou non tissées. Dans le présent exemple, le panneau 2 de matériau en feuille est constitué d'une superposition de huit feuilles de fibres de carbone tissées. Le panneau 2 de matériau en feuille est un panneau souple, au moins lorsqu'il est chauffé à la température requise pour le procédé, c'est-à-dire qu'il peut subir des déformations durant le procédé de fabrication. Dans le présent exemple, le panneau 2 est réalisé à partir de feuilles de pré-imprégné, couramment employées dans le domaine des matériaux composites. Un tel panneau 2 constitué de feuilles de renfort en pré-imprégné comprend déjà la matrice de la future pièce en matériau composite sous forme de charges réparties au sein même des feuilles de renfort.

Le châssis de support 1 comporte un cadre rigide 3 ainsi que deux organes de maintien 4 qui sont adaptés à saisir deux rebords 2A, 2B opposés du panneau 2.

Les organes de maintien 4 peuvent être constitués de tout moyen permettant de saisir et de maintenir le panneau 2 par ses rebords 2A, 2B. Ces organes de maintien 4 peuvent inclure par exemple des pinces élastiques, des moyens de pincement ou de serrage mécaniques, des moyens de maintien adhésifs, etc. Dans le présent exemple, les organes de maintien 4 sont chacun constitués d'une pince formée de deux mors 5. Les deux mors 5 sont ici réalisés par deux barres métalliques munies d'un moyen de serrage permettant le serrage des rebords 2A, 2B entre les barres. Le moyen de serrage est par exemple un élément élastique ou un mécanisme à levier. Sur la figure 1, seul le mors 5 inférieur est visible pour chaque organe de maintien 4. Dans le présent exemple, dans le but de renforcer le maintien du panneau 2 par les organes de maintien 4, ces derniers comportent chacun trois aiguilles 6 s'étendant entre les deux mors 5 et perforant le panneau 2 de part en part.

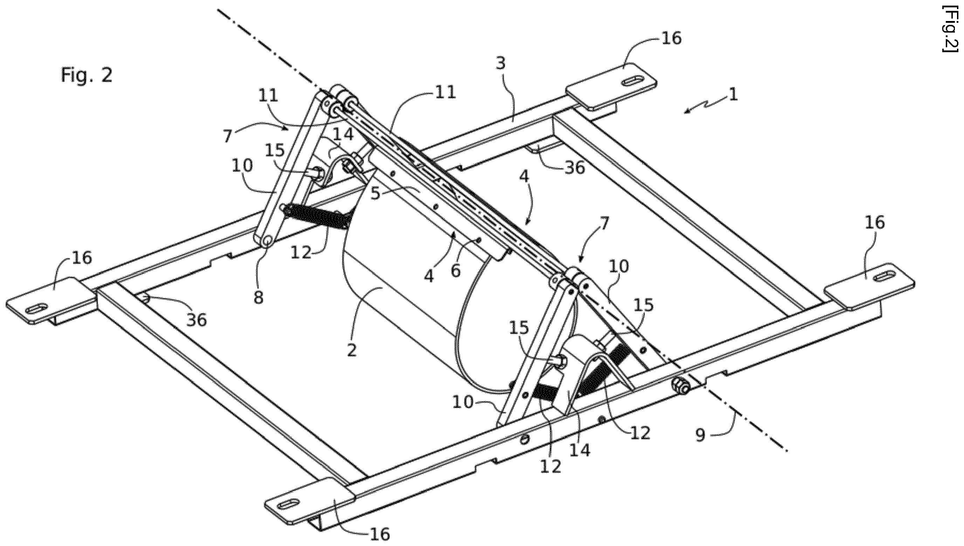

Chaque organe de maintien 4 est monté sur un levier 7 qui est monté pivotant sur le cadre rigide 3. En référence aux figures 1 et 2, les deux leviers 7 sont montés pivotant sur le cadre rigide 3 grâce à des pivots 8 de sorte à pouvoir occuper deux positions stables :
- une position dite de déploiement (représentée à la figure 1) dans laquelle les organes de maintien 4, qui sont portés par les leviers 7, sont écartés l'un de l'autre au maximum et maintiennent le panneau 2 dans une position déployée ;
- une position dite de repli dans laquelle les leviers 7 sont pivotés l'un vers l'autre de sorte que les organes de maintien 4 sont juxtaposés le long d'une direction de juxtaposition 9 (voir figure 2).

Dans la position de repli, les deux organes de maintien 4 sont soit en contact l'un contre l'autre, soit présentent entre eux un faible écartement de quelques millimètres pour éviter qu'ils s'entrechoquent. La direction de juxtaposition 9 est ici définie comme un axe qui est parallèle à la direction dans laquelle s'étendent les barres constituant les mors 5, et qui est situé entre les deux organes de maintien 4 en position juxtaposée. La position de la direction de juxtaposition est donc déterminée par la position des organes de maintien lorsqu'ils sont en position juxtaposée, cette position étant déterminée par la forme des leviers 7 et la position des pivots 8.

Dans la position de repli, le panneau souple 2 forme une boucle entre ses deux rebords 2A, 2B juxtaposés.

Dans le présent exemple, les leviers 7 sont chacun constitués de deux bras 10 parallèles et montés chacun sur l'un des pivots 8. Une tringle 11 est de plus disposée entre ces deux bras 10. Pour chaque levier 7, l'organe de maintien 4 est monté sur cette tringle 11.

Le montage de l'organe de maintien 4 est réalisé de telle sorte qu'il soit en liaison pivot avec le levier 7 correspondant, autour d'un axe parallèle à la direction de juxtaposition 9. Pour chaque levier 7, l'organe de maintien 4 peut être monté pivotant sur la tringle 11 ou, en variante, l'organe de maintien 4 peut être fixé sur la tringle 11 tandis que cette dernière est reliée par des liaisons pivot, à chacune de ses extrémités, aux deux bras 10.

Le châssis de support 1 comporte de plus deux paires de ressorts 12 de traction assurant la stabilité des deux positions de déploiement et de repli. Chacun des ressorts 12 est tendu entre un doigt 13 central du cadre 3 et l'un des bras 10. La position des doigts 13 et des ressort 12 est choisie pour procurer au levier 7 un comportement de genouillère. En effet, dans le présent exemple, les doigts 13 sont situés sous la ligne droite reliant les deux pivots 8 sur chaque bord du cadre 3. Ainsi, lorsque le châssis de support 1 est dans sa position de déploiement, les ressorts 12 tirent les leviers 7 vers le bas (en référence à la position montrée à la figure 1). Inversement, lorsque le châssis de support 1 est dans sa position de repli, les ressorts 12 tirent les leviers 7 vers le haut (en référence à la position montrée à la figure 2). Le cadre 3 comporte des butées 36 pour la position de déploiement et des butées 15 pour la position de repli.

Dans la position de déploiement illustrée à la figure 1, les ressorts 12 sollicitent les leviers 7 vers le bas contre les butées 36 et assurent ainsi la stabilité de cette position de déploiement.

Le châssis de support 1 comporte de plus deux supports centraux 14 portant chacun deux butées réglables 15. Dans la position de repli illustrée à la figure 2, les leviers 7 sont chacun disposés contre les butées réglables 15, les ressorts 12 sollicitant alors les leviers 7 l'un en direction de l'autre, et contre ces butées réglables 15. La possibilité de réglage des butées 15 permet de régler l'éventuel écartement souhaité entre les organes de maintien 4 dans cette position de repli. Les ressorts 12 assurent ainsi également la stabilité de la position de repli en sollicitant les deux leviers 7 contre les butées réglables 15 dans la position de repli.

Le châssis de support 1 peut être associé à des moyens permettant son déplacement au cours du procédé de fabrication. Dans le présent exemple, le cadre 3 comporte des pattes de fixation 16 permettant au châssis de support 1 d'être par exemple monté sur des moyens de déplacement tels que des rails permettant sa translation dans deux directions perpendiculaires à la direction de juxtaposition, ici les deux directions horizontale et verticale (ces rails ne sont pas représentés sur les figures).

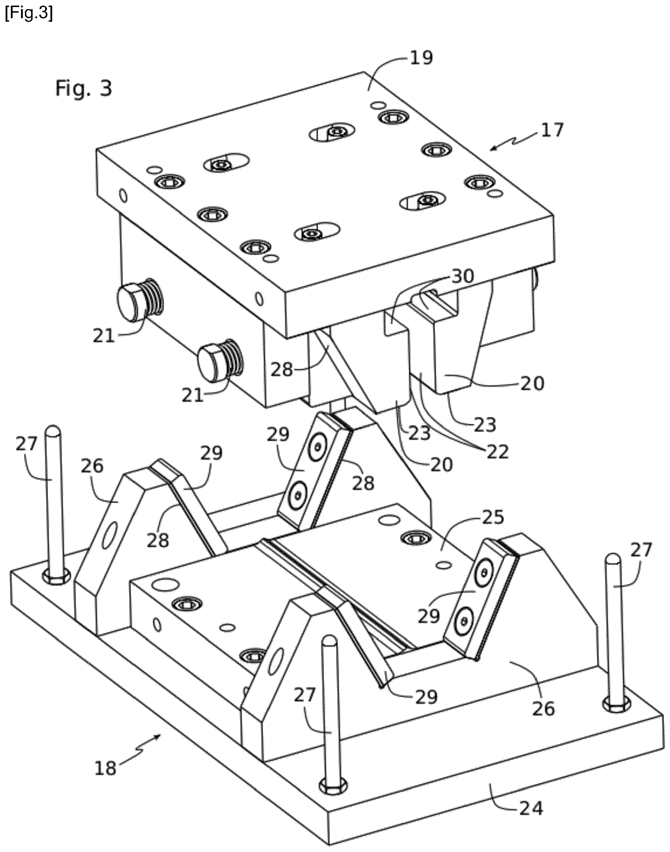

La figure 3 représente d'autres éléments constitutifs du dispositif de fabrication selon l'invention. Cette figure illustre un moule 17 ainsi qu'un contre-moule 18 qui, associés avec le châssis de support 1, permettent la mise en oeuvre du procédé.

Le moule 17 comporte un bâti 19 supportant deux mâchoires mobiles 20. Les deux mâchoires sont mobiles en translation entre une position écartée où les deux mâchoires 20 sont écartées au maximum l'une de l'autre jusqu'à venir en butée contre le bâti 19 (c'est la position illustrée à la figure 3) et une position resserrée obtenue suite au rapprochement des mâchoires 20 l'une vers l'autre. À cet effet, les mâchoires 20 sont donc montées mobiles en translation selon une direction horizontale (dans l'orientation montrée à la figure 3) sur le bâti 19, par une liaison glissière ou tout autre moyen adapté. Le moule 17 comporte également des ressorts de rappel 21 qui traverse le bâti 19 et qui sont fixés d'une part sur le bâti 19 et d'autre part sur les mâchoires 20, de sorte que chaque mâchoire 20 est sollicitée en permanence par les ressorts de rappel 21 vers sa position écartée.

Chaque mâchoire 20 comporte ici deux surfaces de travail : une première surface dite parallèle 22 et une deuxième surface dite perpendiculaire 23.

Les deux surfaces parallèles 22 sont des surfaces planes parallèles entre elles et restent parallèles entre elles quelle que soit la position des mâchoires 20, écartée ou resserrée. Les surfaces parallèles 22 sont disposées en vis-à-vis l'une de l'autre.

Les deux surfaces perpendiculaires 23 sont quant à elles situées dans un même plan. Les surfaces perpendiculaires 23 sont ici des surfaces planes qui sont perpendiculaires aux surfaces parallèles 22. De telles mâchoires 20 permettent de réaliser un profilé dont la section est en T. La forme des surfaces parallèles 22 et perpendiculaires 23 peut être facilement adaptée pour former d'autres profilés dont la section présente trois branches, tel qu'un profilé en Y. D'autres types de profilé de matériau composite dont la section présente trois branches peuvent être obtenus avec le même dispositif de fabrication, en changeant simplement les mâchoires 20 qui sont montées de manière amovible sur le bâti 19.

Les mâchoires 20 comportent de plus des arêtes obliques 28 permettant de commander leur passage de la position écartée à la position rapprochée. Sur la figure 3, seule une arête oblique 28 est visible pour chaque mâchoire 20, étant entendu que chaque mâchoire 20 comporte une autre arête oblique 28 disposée symétriquement à son extrémité opposée à l'arête oblique 28 visible sur la figure 3.

Les mâchoires 20 comportent de plus chacune une cavité 30 s'étendant sur toute la longueur des mâchoires 20 et permettant le contournement des organes de maintien 4 lorsque le moule et le contre-moule sont en position de serrage, comme expliqué plus loin.

Le contre-moule 18 comporte un bâti 24 sur lequel sont montés un socle 25, deux organes de rapprochement 26, et quatre tiges d'activation 27.

Le socle 25 présente une surface plane adaptée à la production d'un profilé dont la section présente une forme de T, conformément au présent exemple. De même que pour les mâchoires 20, la forme de ce socle 25 peut être facilement adaptée pour produire d'autres types de profilé de matériau composite dont la section présente trois banches, tel qu'un profilé dont la section est en forme de Y. Le socle 25 est monté de manière amovible sur le bâti 24 et peut ainsi être changé facilement. Dans le présent exemple, la surface du socle 25 est parallèle au plan contenant les surfaces perpendiculaires 23 des mâchoires 20.

Les deux organes de rapprochement 26 sont montés de part et d'autre du socle 25, en vis-à-vis des arêtes obliques 28 des mâchoires 20. Les organes de rapprochement 26 portent chacun deux plaquettes obliques 29 réalisées de préférence dans un matériau à faible coefficient de friction. Les plaquettes 29 sont orientées obliquement de la même manière que les arêtes obliques 28 des mâchoires 20. Autrement dit, l'angle formé par chaque plaquette 29 et la verticale est égal à l'angle formé entre chaque arête oblique 28 et la verticale. Les arêtes obliques 28 sont chacune parallèles à la plaquette 29 qui lui est en vis-à-vis. Les plaquettes 29 présentent le même angle par rapport à la direction de rapprochement (ici la verticale) que les arêtes obliques.

Les arêtes obliques 28 et les plaquettes 29 sont disposées en vis-à-vis, c'est-à-dire que si l'on rapproche le moule 17 du contre-moule 18, chaque arête oblique vient au contact de la plaquette 29 qui lui est en vis-à-vis.

Les tiges d'activation 27 sont des tiges rigides verticales fixées dans le bâti 24 et positionnées de manière à pouvoir activer le changement de position des leviers 7 du châssis de support 1 comme expliqué plus loin.

Un exemple de procédé de fabrication d'un profilé en matériau composite dont la section est en forme de T va maintenant être décrit en mettant en oeuvre le dispositif qui vient d'être décrit.

Dans une première étape, illustrée en référence à la figure 1, le panneau 2 de matériau en feuille est mis en place dans le châssis de support 1. Le panneau 2 peut être constitué en dehors du châssis de support 1 en empilant des couches de matériau en feuille, puis être mis en place entre les organes de maintien 4 de sorte que chaque paire de mors 5 vienne serrer l'extrémité 2A, 2B correspondante du panneau 2. Alternativement, les feuilles de matériau peuvent être directement drapées dans le châssis de support 1 pour former le panneau 2. Les feuilles de matériau peuvent ainsi être fixées une par une sur les aiguilles 6 et, lorsque le panneau 2 est complet, les mors 5 peuvent ensuite être refermés. D'autres systèmes de fixation du panneau 2 aux tringles 11 ou aux bras 10 peuvent alternativement être utilisés.

Dans cet exemple de réalisation, le panneau 2 étant réalisé à partir de feuilles de renfort de pré-imprégné, le châssis de support 1 peut être translaté à l'intérieur d'un four à l'aide des rails décrits précédemment. Le panneau 2 est ainsi directement chauffé dans le four pour activer ou mélanger la résine des matériaux en feuilles de pré-imprégné.

La mobilité du châssis de support 1 lui permet ainsi d'occuper une au plusieurs positions de préparation pour la mise en place du panneau 2 et/ou sa mise en température par réchauffement.

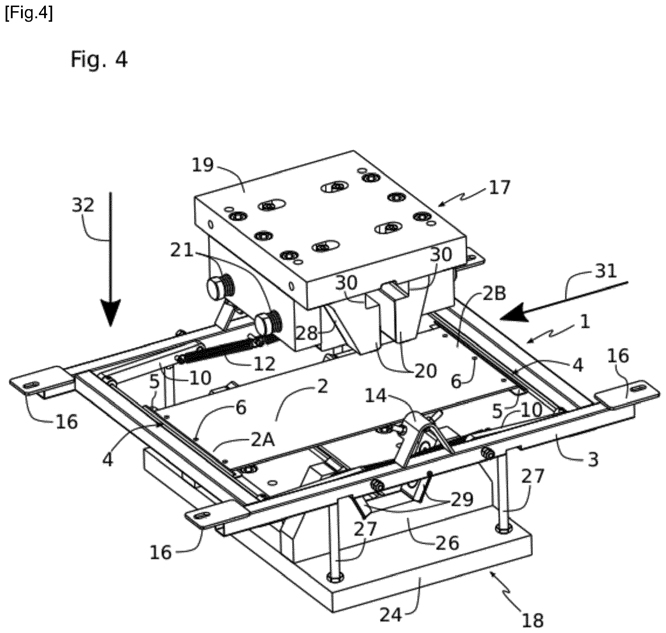

Dans une deuxième étape illustrée à la figure 4, le châssis de support 1 est sorti du four et est translaté horizontalement selon une direction 31 vers une position de travail où il est positionné entre le moule 17 et le contre-moule 18.

Le châssis de support 1 est ensuite translaté verticalement vers le bas selon la direction 32.

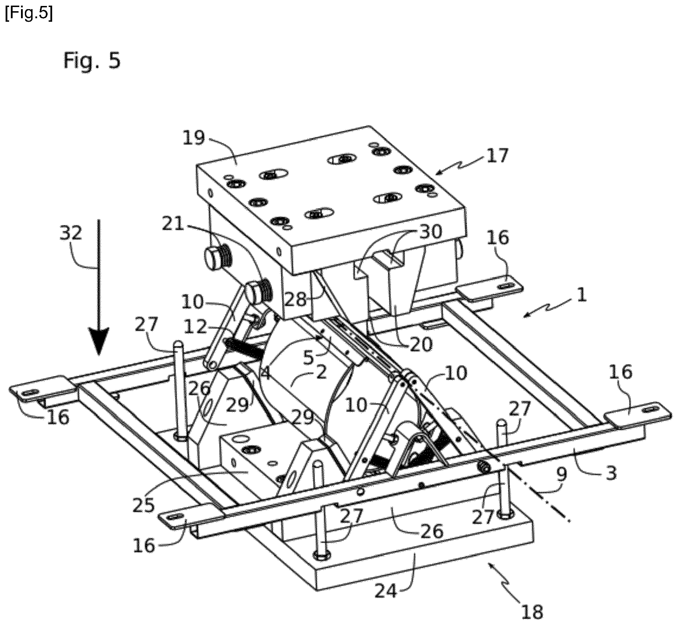

Les tiges d'activation 27 sont positionnées pour être chacune en vis-à-vis d'un bras 10 de sorte que, lorsque le châssis de support 1 est translaté vers le bas, durant une première phase de rapprochement du moule 17 et du contre-moule 18, chaque tige d'activation vient repousser vers le haut l'un des bras 10. Compte tenu du comportement de dispositif à genouillère des leviers 7, les tiges d'activation 27 repoussent tout d'abord les bras 10 jusqu'à leur position de changement de point d'équilibre, dans laquelle le bras 10 est aligné avec la ligne droite reliant son pivot 8 à son doigt 13. Lorsque les tiges d'activation 27 repoussent les bras 10 au-delà de cette position d'équilibre, les ressorts 12 agissent alors en rapprochement entre les deux leviers 7 qui passent alors à leur position de repli (voir figure 5).

La translation verticale vers le bas du châssis de support 1, c'est-à-dire en direction du socle 25, est stoppée en fonction de la configuration souhaitée pour le profilé. La distance entre les organes de maintien 4 dans leur position juxtaposée et le socle 25 détermine en effet la longueur de l'une des branches de la section du profilé fini.

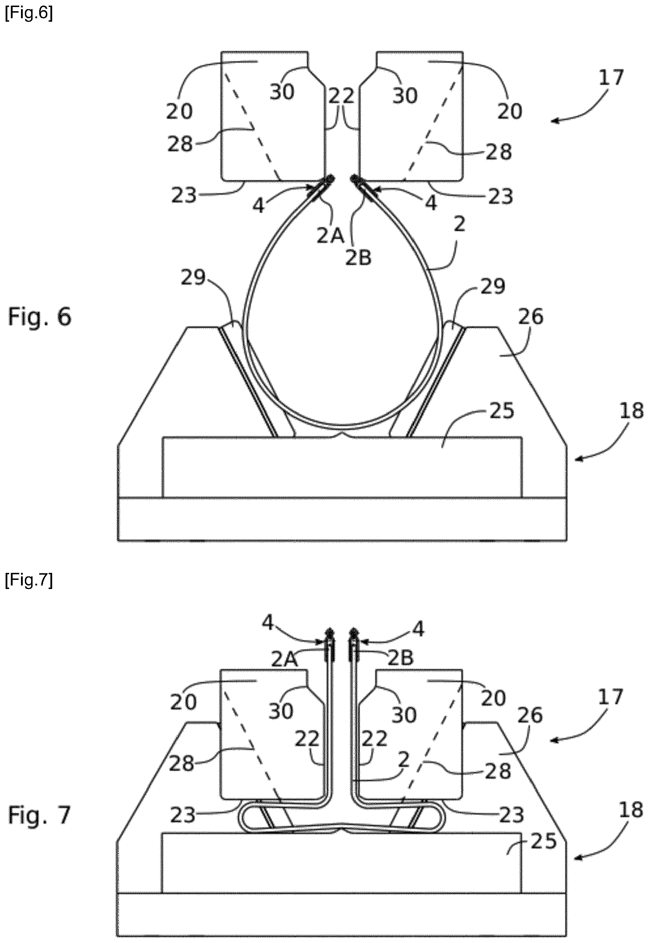

Les figures 6 à 8 sont des vues schématiques de côté illustrant la suite des opérations du procédé de fabrication.

À partir de la position illustrée à la figure 5, le moule 17 va ensuite être rapproché du contre-moule 18, et donc du socle 25. Comme illustré à la figure 6, les mâchoires 20 sont toujours dans leur position écartée sous l'effet des ressorts de rappel 21. Les mâchoires 20 sont translatées en direction du socle 25 et s'engagent de part et d'autre des organes de maintien 4 juxtaposés. Bien que les mâchoires 20 soient dans leur position écartée sous l'effet des ressorts de rappel 21, les surfaces parallèles 22 et perpendiculaires 23 commencent à mettre en forme le panneau 2, qui est en forme de boucle, en rapprochant des portions du panneau 2 au fur et à mesure de la translation vers le bas des mâchoires 20.

En référence à la figure 7, la translation vers le bas des mâchoires 20, en direction du socle 25, mène à une position où les arêtes obliques 28 des mâchoires 20 viennent au contact des plaquettes 29 des organes de rapprochement 26. À partir de cette position, les inclinaisons identiques deux à deux des arêtes obliques 28 et des plaquettes 29 entrainent un rapprochement mutuel des mâchoires 20 au fur et à mesure du rapprochement entre les mâchoires 20 et le socle 25, chaque arête oblique 28 glissant sur une plaquette 29.

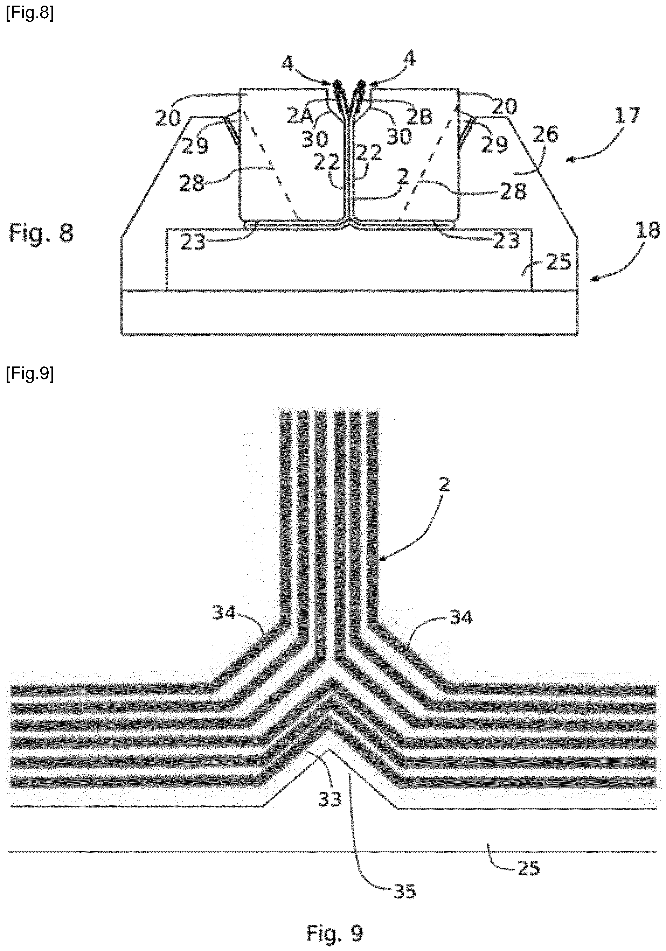

Le mouvement de translation du moule 17 vers le contre-moule 18 se poursuit jusqu'à la position de la figure 8 dans laquelle le moule 17 et le contre-moule 18 ont atteint leur position mutuelle finale déterminant l'épaisseur souhaitée pour les trois branches en section du profilé en cours de fabrication. Dans cette position, le matériau en feuille est pressé simultanément entre les deux mâchoires 20 d'une part et entre les mâchoires 20 et le socle 25 d'autre part. Cette position correspond à une position de serrage où les mâchoires 20 du moule 17 sont en position resserrée et sont disposées en vis-à-vis du socle 25 du contre-moule 18, à une distance correspondant à l'épaisseur souhaitée pour la pièce dans la région considérée.

Cette position finale est déterminée par la mise en butée des mâchoires 20 contre les organes de rapprochement 26. Les cavités 30 des mâchoires 20 sont prévues pour permettre le serrage du panneau 2 et sa mise en forme sans que les mâchoires 20 ne touchent les organes de maintien 4.

Le panneau 2 étant ainsi mis en forme et maintenu serré entre les mâchoires 20 et le socle 25, conformément à la figure 8, une dernière opération de durcissement ou de consolidation de la matrice de matériau composite est ensuite mise en oeuvre. Dans le présent exemple, le panneau 2 étant formé de feuilles de pré-imprégné qui ont été préalablement passées au four, cette dernière étape consiste en un refroidissement contrôlé de la pièce. En pratique, ce temps de durcissement ou de consolidation est de l'ordre de la minute.

En variante, si le panneau 2 est uniquement réalisé à partir d'une ou plusieurs feuilles sèches de renfort (sans pré-imprégnation), une résine liquide peut être coulée pour imprégner le renfort lorsque le dispositif est dans sa position de la figure 8. La matrice de résine est ensuite durcie par tout moyen connu.

La pièce finale est ensuite démoulée simplement en écartant le moule 17 du contre-moule 18, ce qui provoque également l'écartement des mâchoires 20 sous l'effet des ressorts de rappel 21. Les organes de maintien 4 sont ensuite détachés de la pièce finie, ou la pièce finie est coupée à ce niveau et la pièce finie peut ensuite être extraite du dispositif.

En variante, les organes de maintien 4 peuvent être détachés des leviers 7 et rester sur la pièce finale, offrant ainsi un moyen de préhension et de mise en position de la pièce finale par exemple pour des opérations subséquentes d'usinage ou de finition. Dans ce cas, les organes de maintien 4 sont détachables des tringles 11 ou les tringles 11 sont détachables des bras 10.

Des variantes dans la forme du profilé en matériau composite dont la section présente trois branches peuvent être mises en oeuvre, comme par exemple la forme en Y représentée à la figure 9. La figure 9 illustre une section d'un profilé obtenu avec les mêmes procédés et dispositifs décrits précédemment, si ce n'est que les mâchoires et le socle a été changé. Le profilé de la figure 9 a été obtenu à partir d'un panneau 2 fait d'une superposition de trois feuilles de matériau en feuille.

Dans l'exemple de la figure 9, le socle 25 est muni d'une nervure 35 dont la section est triangulaire et qui permet de former un décrochement 33 dans la pièce finale, ce qui favorise la fabrication d'un profilé sans défauts intérieurs. Les mâchoires 20 permettant de réaliser le profilé de la figure 9 comprennent chacune un biseau entre sa surface parallèle 22 et sa surface perpendiculaire 23, ce biseau correspondant au raccordement oblique 34 de la pièce.

Des variantes de réalisation du dispositif et du procédé de fabrication peuvent être envisagées sans sortir du cadre de l'invention, par exemple toute forme de mâchoire 20 et de socle 25 peut être prévue en fonction d'un profilé que l'on souhaite obtenir. Les surfaces parallèles 22 et perpendiculaires 23 ainsi que la surface du socle 25 peuvent par exemple être imprimées de motifs ou d'ondulations plutôt qu'être des surfaces planes. Les trois branches du profilé obtenues peuvent de plus présenter un autre angle que ceux présentés ici en exemple, en modifiant par exemple la direction de rapprochement entre le moule et le contre-moule et en adaptant les arêtes obliques 28 et le positionnement des plaquettes 29 en conséquence.

## Revendications

1. Procédé de fabrication d'un profilé en matériau composite dont la section présente trois branches comportant
les étapes suivantes :
- rapprocher l'un de l'autre deux rebords (2A, 2B) opposés d'un panneau (2) de matériau en feuille, de sorte que ces deux rebords opposés (2A, 2B) soient juxtaposés le long d'une direction de juxtaposition (9) ;
- déplacer en translation une paire de mâchoires (20) dans une direction perpendiculaire à la direction de juxtaposition (9), de sorte que la paire de mâchoires (20) se place de part et d'autre desdits rebords opposés juxtaposés (2A, 2B), ce déplacement en translation de la paire de mâchoires (20) étant réalisé en direction d'un socle (25) ;
- presser simultanément le matériau en feuille entre les deux mâchoires (20) d'une part et entre les mâchoires (20) et le socle (25) d'autre part ;
- finaliser le profilé en matériau composite par durcissement d'une matrice imprégnant le matériau en feuille.

2. Procédé selon la revendication 1, **caractérisé en ce que** :
- il comporte, avant l'étape de rapprocher l'un de l'autre deux rebords opposés (2A, 2B) d'un panneau (2) de matériau en feuille, une étape de fixation d'un organe de maintien (4) sur chacun desdits rebords opposés (2A, 2B) du panneau (2) de matériau en feuille ;
- l'étape de rapprocher l'un de l'autre deux rebords opposés (2A, 2B) du panneau (2) de matériau en feuille est réalisée par le rapprochement des organes de maintien (4) et leur passage d'une position de déploiement à une position de repli.

3. Procédé selon la revendications 2, **caractérisé en ce qu'**il comporte une étape de superposition de feuilles de matériau en feuille pour constituer le panneau (2) de matériau en feuille entre les deux organes de maintien (4) lorsqu'ils sont en position de déploiement.

4. Procédé selon l'une des revendications 1 à 3, **caractérisé en ce qu'**il comporte, avant l'étape de rapprocher l'un de l'autre deux rebords opposés (2A, 2B) d'un panneau (2) de matériau en feuille, une étape de réchauffement du panneau (2) de matériau en feuille, le panneau (2) étant constitué de feuilles de pré-imprégné.

5. Procédé selon l'une des revendications 1 à 4, **caractérisé en ce que** l'étape de rapprocher l'un de l'autre deux rebords opposés (2A, 2B) d'un panneau (2) de matériau en feuille est réalisée durant une première phase de rapprochement de la paire de mâchoires (20) du socle (25), par l'action de tiges d'activation (27) fixes par rapport au socle (25).

6. Procédé selon l'une des revendications 1 à 5, **caractérisé en ce que**, dans l'étape de presser simultanément le matériau en feuille entre les deux mâchoires (20) d'une part et entre les mâchoires (20) et le socle (25) d'autre part, le matériau en feuille est pressé entre deux surfaces (22) parallèles entre elles des mâchoires (20), et **en ce que** le matériau en feuille est simultanément pressé entre le socle (25) et deux surfaces (23) perpendiculaires aux surfaces (22) parallèles des mâchoires (20).

7. Procédé selon l'une quelconque des revendications précédentes, **caractérisé en ce que**, lors de l'étape de presser simultanément le matériau en feuille entre les deux mâchoires (20) d'une part et entre les mâchoires (20) et le socle (25) d'autre part, le matériau en feuille est pressé contre une nervure (35) située sur le socle (25) et formant un décrochement (33) dans le matériau en feuille.

8. Procédé selon l'une quelconque des revendications précédentes **caractérisé en ce que**, durant l'étape de déplacer en translation une paire de mâchoires (20) dans une direction perpendiculaire à la direction de juxtaposition (9), les mâchoires (20) sont simultanément rapprochées l'une de l'autre par la coopération d'arêtes obliques (28) solidaires des mâchoires (20) et de plaquettes obliques (29) fixes par rapport au socle (25).

9. Procédé selon la revendication 8, **caractérisé en ce que** les mâchoires (20) sont sollicitées vers leur position d'écartement par des ressorts de rappel (21).

10. Dispositif de fabrication d'un profilé en matériau composite dont la section présente trois branches, ce dispositif comportant :
- un châssis de support (1) pour un panneau (2) de matériau en feuille, ce châssis de support (1) comportant :
• un cadre rigide (3) présentant une ouverture centrale pour un panneau (2) de matériau en feuille ;
• deux organes de maintien (4) adaptées à saisir deux rebords opposés (2A, 2B) d'un panneau (2) de matériau en feuille ;
• deux leviers (7) supportant chacun un des organes de maintien (4), ces leviers (7) étant montés pivotants sur le cadre rigide (3) entre une position de déploiement où les organes de maintien (4) sont écartés l'un de l'autre, et une position de repli où les organes de maintien (4) sont juxtaposés le long d'une direction de juxtaposition (9) ;
- un moule (17) muni de deux mâchoires (20) mobiles l'une par rapport à l'autre entre une position écartée et une position resserrée ;
- un contre-moule (18) muni d'un socle (25) ;
le châssis de support (1) étant adapté à occuper une position de travail dans laquelle il est disposé entre le moule (17) et le contre-moule (18),
le moule (17) et le contre-moule (18) étant mobiles l'un par rapport à l'autre, selon une direction de translation qui est perpendiculaire à la direction de juxtaposition (9), entre une position d'éloignement mutuel et une position de serrage où les mâchoires (20) du moule (17) sont en position resserrée et sont disposées en vis-à-vis du socle (25) du contre-moule (18).

11. Dispositif selon la revendication 10, **caractérisé en ce que** les organes de maintien (4) sont des pinces formées chacune de deux mors (5) et comportant un moyen de serrage.

12. Dispositif selon l'une des revendications 10 et 11, **caractérisé en ce que** les deux mors (5) sont des barres et comportent des aiguilles (6) s'étendant entre les deux mors (5).

13. Dispositif selon l'une des revendications 10 à 12, **caractérisé en ce que** chaque levier (7) comporte deux bras (10) parallèles entre eux, chaque bras étant relié au cadre rigide (3) par un pivot (8) et les deux bras d'un même levier étant reliés ensemble par une tringle (11), chaque organe de maintien (4) étant monté sur une de ces tringles (11).

14. Dispositif selon l'une des revendications 10 à 13, **caractérisé en ce que** chaque organe de maintien (4) est relié au levier (7) correspondant par une liaison pivot autour d'un axe parallèle à la direction de juxtaposition (9).

15. Dispositif selon l'une des revendications 10 à 14, **caractérisé en ce que** le cadre rigide (3) comporte des butées (36) pour les leviers (7) en position de déploiement.

16. Dispositif selon l'une des revendications 10 à 15, **caractérisé en ce que** le cadre rigide (3) comporte un support central (14) muni de butées réglables (15) déterminant la position de repli des leviers (7).

17. Dispositif selon l'une des revendications 10 à 16, **caractérisé en ce que** le cadre rigide (3) comporte des pattes de fixation (16) pour sa fixation sur des moyens de translation.

18. Dispositif selon l'une des revendications 10 à 17, **caractérisé en ce que** le cadre rigide (3) est fixé sur des moyens de translation selon deux directions perpendiculaires à la direction de juxtaposition (9).

19. Dispositif selon l'une des revendications 10 à 18, **caractérisé en ce que** le moule (17) comporte un bâti (19) sur lequel sont montées mobiles en translation les deux mâchoires (20) sollicitées vers leur position écartée par des ressorts de rappel (21).

20. Dispositif selon l'une des revendications 10 à 19, **caractérisé en ce que** les mâchoires (20) comportent chacune une cavité (30) de contournement des organes de maintien (4) lorsque le moule (17) et le contre-moule (18) sont dans leur position de serrage.

21. selon l'une des revendications 10 à 20, **caractérisé en ce que** chaque mâchoire (20) comporte une première surface (22), les deux premières surfaces (22) des mâchoires (20) étant parallèles, situées en vis-à-vis l'une de l'autre et adaptées à serrer entre elles un panneau (2) de matériau en feuille lorsque les mâchoires (20) sont dans leur position resserrée et **en ce que** chaque mâchoire (20) comporte une deuxième surface (23) perpendiculaire à la première surface (22), les deuxièmes surfaces (23) des deux mâchoires (20) étant adaptées à serrer entre elles et le socle (25) un panneau (2) de matériau en feuille lorsque le moule (17) et le contre-moule (18) sont dans leur position de serrage.

22. Dispositif selon l'une des revendications 10 à 21, **caractérisé en ce que** le contre-moule (18) comporte un bâti (24) sur lequel le socle (25) est monté de manière amovible.

23. Dispositif selon l'une des revendications 10 à 22, **caractérisé en ce que** le châssis de support (1) comporte des moyens élastiques (12) à genouillère sollicitant les leviers (7) vers l'une ou l'autre des positions de déploiement et de repli.

24. Dispositif selon l'une des revendications 10 à 23, **caractérisé en ce que** le contre-moule (18) comporte des tiges d'activation (27) sollicitant les leviers (7) de leur position de déploiement vers leur position de repli lorsque le moule (17) et le contre-moule (18) sont translatés en direction de leur position de serrage.

25. Dispositif selon l'une des revendications 10 à 24, **caractérisé en ce que** le châssis de support (1) présente :
- une position de travail dans laquelle il est disposé entre le moule (17) et le contre-moule (18) ;
- une position de préparation où il est à l'écart de l'espace entre le moule (17) et le contre-moule (18).

## Patentansprüche

1. Verfahren zur Herstellung eines Profilteils aus Verbundmaterial, dessen Querschnitt drei Schenkel aufweist, die folgenden Schritte umfassend:
- Annähern zweier gegenüberliegender Ränder (2A, 2B) einer Platte (2) aus Folienmaterial aneinander, derart, dass diese zwei gegenüberliegenden Ränder (2A, 2B) entlang einer Richtung der Nebeneinanderanordnung (9) nebeneinander angeordnet sind;
- translatorisches Bewegen eines Paares von Klemmbacken (20) in einer zur Richtung der Nebeneinanderanordnung (9) senkrechten Richtung, derart, dass das Paar von Klemmbacken (20) beiderseits der nebeneinander angeordneten gegenüberliegenden Ränder (2A, 2B) positioniert wird, wobei diese translatorische Bewegung des Paares von Klemmbacken (20) in Richtung eines Sockels (25) durchgeführt wird;
- gleichzeitiges Pressen des Folienmaterials zwischen den zwei Klemmbacken (20) einerseits und zwischen den Klemmbacken (20) und dem Sockel (25) andererseits;
- Fertigbearbeiten des Profilteils aus Verbundmaterial durch Härten einer Matrix, mit der das Folienmaterial imprägniert ist.

2. Verfahren nach Anspruch 1, **dadurch gekennzeichnet, dass**:
- es vor dem Schritt des Annäherns zweier gegenüberliegender Ränder (2A, 2B) einer Platte (2) aus Folienmaterial aneinander einen Schritt der Befestigung eines Halteorgans (4) an jedem der gegenüberliegenden Ränder (2A, 2B) der Platte (2) aus Folienmaterial umfasst;
- der Schritt des Annäherns zweier gegenüberliegender Ränder (2A, 2B) der Platte (2) aus Folienmaterial durch Annäherung der Halteorgane (4) und ihren Übergang aus einer Entfaltungsposition in eine Faltungsposition durchgeführt wird.

3. Verfahren nach Anspruch 2, **dadurch gekennzeichnet, dass** es einen Schritt des Übereinanderlegens von Blättern aus Folienmaterial zum Bilden der Platte (2) aus Folienmaterial zwischen den zwei Halteorganen (4), wenn sie sich in der Entfaltungsposition befinden, umfasst.

4. Verfahren nach einem der Ansprüche 1 bis 3, **dadurch gekennzeichnet, dass** es vor dem Schritt des Annäherns zweier gegenüberliegender Ränder (2A, 2B) einer Platte (2) aus Folienmaterial aneinander einen Schritt der Erwärmung der Platte (2) aus Folienmaterial umfasst, wobei die Platte (2) aus Prepreg-Folien besteht.

5. Verfahren nach einem der Ansprüche 1 bis 4, **dadurch gekennzeichnet, dass** der Schritt des Annäherns zweier gegenüberliegender Ränder (2A, 2B) einer Platte (2) aus Folienmaterial aneinander während einer ersten Phase der Annäherung des Paares von Klemmbacken (20) an den Sockel (25) durch die Wirkung von Aktivierungsstäben (27) durchgeführt wird, die in Bezug auf den Sockel (25) feststehend sind.

6. Verfahren nach einem der Ansprüche 1 bis 5, **dadurch gekennzeichnet, dass** im Schritt des gleichzeitigen Pressens des Folienmaterials zwischen den zwei Klemmbacken (20) einerseits und zwischen den Klemmbacken (20) und dem Sockel (25) andererseits das Folienmaterial zwischen zwei parallelen Flächen (22) der Klemmbacken (20) gepresst wird, und dadurch, dass das Folienmaterial gleichzeitig zwischen dem Sockel (25) und zwei Flächen (23), die zu den parallelen Flächen (22) der Klemmbacken (20) senkrecht sind, gepresst wird.

7. Verfahren nach einem der vorhergehenden Ansprüche, **dadurch gekennzeichnet, dass** im Schritt des gleichzeitigen Pressens des Folienmaterials zwischen den zwei Klemmbacken (20) einerseits und zwischen den Klemmbacken (20) und dem Sockel (25) andererseits das Folienmaterial gegen eine Rippe (35) gepresst wird, die sich auf dem Sockel (25) befindet und einen Rücksprung (33) in dem Folienmaterial bildet.

8. Verfahren nach einem der vorhergehenden Ansprüche, **dadurch gekennzeichnet, dass** während des Schrittes des translatorischen Bewegens eines Paares von Klemmbacken (20) in einer zur Richtung der Nebeneinanderanordnung (9) senkrechten Richtung die Klemmbacken (20) durch das Zusammenwirken von schrägen Kanten (28), die mit den Klemmbacken (20) fest verbunden sind, und von schrägen Plättchen (29), die in Bezug auf den Sockel (25) feststehend sind, gleichzeitig aneinander angenähert werden.

9. Verfahren nach Anspruch 8, **dadurch gekennzeichnet, dass** die Klemmbacken (20) von Rückstellfedern (21) in Richtung ihrer voneinander beabstandeten Position beaufschlagt werden.

10. Vorrichtung zur Herstellung eines Profilteils aus Verbundmaterial, dessen Querschnitt drei Schenkel aufweist, wobei diese Vorrichtung umfasst:
- ein Traggerüst (1) für eine Platte (2) aus Folienmaterial, wobei dieses Traggerüst (1) umfasst:
• einen starren Rahmen (3), der eine zentrale Öffnung für eine Platte (2) aus Folienmaterial aufweist;
• zwei Halteorgane (4), die dazu eingerichtet sind, zwei gegenüberliegende Ränder (2A, 2B) einer Platte (2) aus Folienmaterial zu erfassen;
• zwei Hebel (7), die jeweils eines der Halteorgane (4) tragen, wobei diese Hebel (7) an dem starren Rahmen (3) schwenkbar zwischen einer Entfaltungsposition, in der die Halteorgane (4) voneinander beabstandet sind, und einer Faltungsposition, in der die Halteorgane (4) entlang einer Richtung der Nebeneinanderanordnung (9) nebeneinander angeordnet sind, angebracht sind;
- eine Form (17), die mit zwei Klemmbacken (20) ausgestattet ist, die relativ zueinander zwischen einer beabstandeten Position und einer angenäherten Position beweglich sind;
- eine Gegenform (18), die mit einem Sockel (25) ausgestattet ist;
wobei das Traggerüst (1) dazu eingerichtet ist, eine Arbeitsposition einzunehmen, in welcher es zwischen der Form (17) und der Gegenform (18) angeordnet ist,
wobei die Form (17) und die Gegenform (18) relativ zueinander in einer Translationsrichtung, welche senkrecht zur Richtung der Nebeneinanderanordnung (9) ist, zwischen einer voneinander entfernten Position und einer Klemmposition, in der die Klemmbacken (20) der Form (17) sich in der angenäherten Position befinden und gegenüber dem Sockel (25) der Gegenform (18) angeordnet sind, beweglich sind.

11. Vorrichtung nach Anspruch 10, **dadurch gekennzeichnet, dass** die Halteorgane (4) Klemmen sind, die jeweils von zwei Backen (5) gebildet werden und ein Klemmmittel umfassen.

12. Vorrichtung nach einem der Ansprüche 10 und 11, **dadurch gekennzeichnet, dass** die zwei Backen (5) Leisten sind und Nadeln (6) umfassen, die sich zwischen den zwei Backen (5) erstrecken.

13. Vorrichtung nach einem der Ansprüche 10 bis 12, **dadurch gekennzeichnet, dass** jeder Hebel (7) zwei zueinander parallele Arme (10) umfasst, wobei jeder Arm mit dem starren Rahmen (3) durch einen Drehzapfen (8) verbunden ist und die zwei Arme ein und desselben Hebels durch eine Stange (11) miteinander verbunden sind, wobei jedes Halteorgan (4) an einer dieser Stangen (11) angebracht ist.

14. Vorrichtung nach einem der Ansprüche 10 bis 13, **dadurch gekennzeichnet, dass** jedes Halteorgan (4) mit dem entsprechenden Hebel (7) durch eine Schwenkverbindung um eine zur Richtung der Nebeneinanderanordnung (9) parallele Achse verbunden ist.

15. Vorrichtung nach einem der Ansprüche 10 bis 14, **dadurch gekennzeichnet, dass** der starre Rahmen (3) Anschläge (36) für die Hebel (7) in der Entfaltungsposition umfasst.

16. Vorrichtung nach einem der Ansprüche 10 bis 15, **dadurch gekennzeichnet, dass** der starre Rahmen (3) eine zentrale Stütze (14) umfasst, die mit verstellbaren Anschlägen (15) ausgestattet ist, welche die Faltungsposition der Hebel (7) bestimmen.

17. Vorrichtung nach einem der Ansprüche 10 bis 16, **dadurch gekennzeichnet, dass** der starre Rahmen (3) Befestigungslaschen (16) für seine Befestigung auf Mitteln zur Translation umfasst.

18. Vorrichtung nach einem der Ansprüche 10 bis 17, **dadurch gekennzeichnet, dass** der starre Rahmen (3) auf Mitteln zur Translation in zwei Richtungen befestigt ist, die zur Richtung der Nebeneinanderanordnung (9) senkrecht sind.

19. Vorrichtung nach einem der Ansprüche 10 bis 18, **dadurch gekennzeichnet, dass** die Form (17) ein Gestell (19) umfasst, auf dem die zwei Klemmbacken (20), die von Rückstellfedern (21) in Richtung ihrer voneinander beabstandeten Position beaufschlagt werden, translatorisch beweglich sind.

20. Vorrichtung nach einem der Ansprüche 10 bis 19, **dadurch gekennzeichnet, dass** die Klemmbacken (20) jeweils einen Hohlraum (30) zur Umgehung der Halteorgane (4), wenn sich die Form (17) und die Gegenform (18) in ihrer Klemmposition befinden, umfassen.

21. Vorrichtung nach einem der Ansprüche 10 bis 20, **dadurch gekennzeichnet, dass** jede Klemmbacke (20) eine erste Fläche (22) umfasst, wobei die zwei ersten Flächen (22) der Klemmbacken (20) parallel, einander gegenüberliegend angeordnet und dazu eingerichtet sind, zwischen sich eine Platte (2) aus Folienmaterial festzuklemmen, wenn sich die Klemmbacken (20) in ihrer angenäherten Position befinden, und dadurch, dass jede Klemmbacke (20) eine zweite Fläche (23) umfasst, die zur ersten Fläche (22) senkrecht ist, wobei die zweiten Flächen (23) der zwei Klemmbacken (20) dazu eingerichtet sind, zwischen sich und dem Sockel (25) eine Platte (2) aus Folienmaterial festzuklemmen, wenn sich die Form (17) und die Gegenform (18) in ihrer Klemmposition befinden.

22. Vorrichtung nach einem der Ansprüche 10 bis 21, **dadurch gekennzeichnet, dass** die Gegenform (18) ein Gestell (24) umfasst, auf dem der Sockel (25) lösbar angebracht ist.

23. Vorrichtung nach einem der Ansprüche 10 bis 22, **dadurch gekennzeichnet, dass** das Traggerüst (1) elastische Kniehebelmittel (12) umfasst, welche die Hebel (7) in Richtung der einen oder anderen von der Entfaltungs- und der Faltungsposition beaufschlagen.

24. Vorrichtung nach einem der Ansprüche 10 bis 23, **dadurch gekennzeichnet, dass** die Gegenform (18) Aktivierungsstäbe (27) umfasst, welche die Hebel (7) aus ihrer Entfaltungsposition in Richtung ihrer Faltungsposition beaufschlagen, wenn die Form (17) und die Gegenform (18) translatorisch in Richtung ihrer Klemmposition bewegt werden.

25. Vorrichtung nach einem der Ansprüche 10 bis 24, **dadurch gekennzeichnet, dass** das Traggerüst (1) aufweist:
- eine Arbeitsposition, in welcher es zwischen der Form (17) und der Gegenform (18) angeordnet ist;
- eine Vorbereitungsposition, in welcher es von dem Raum zwischen der Form (17) und der Gegenform (18) beabstandet ist.

## Claims

1. A method for manufacturing a profile made of composite material having a cross section with three branches, with the following steps:
- moving two opposite rims (2A, 2B) of a panel (2) of sheet material toward one another such that these two opposite rims (2A, 2B) are juxtaposed in a juxtaposing direction (9);
- moving a pair of jaws (20) in translation in a direction perpendicular to the juxtaposing direction (9) such that the pair of jaws (20) is positioned on either side of said juxtaposed opposite rims (2A, 2B), this movement in translation of the pair of jaws (20) being effected in the direction of a base (25);
- simultaneously pressing the sheet material between the two jaws (20) for the one part and between the jaws (20) and the base (25) for the other part;
- completing the profile made of composite material by curing a matrix impregnating the sheet material.

2. The method as claimed in claim 1, **characterized in that**:
- it includes, before the step of moving two opposite rims (2A, 2B) of a panel (2) of sheet material toward one another, a step of fixing a holding member (4) to each of said opposite rims (2A, 2B) of the panel (2) of sheet material;
- the step of moving two opposite rims (2A, 2B) of the panel (2) of sheet material toward one another is effected by moving the holding members (4) toward one another and passing them from an opened-out position to a folded-up position.

3. The method as claimed in claim 2, **characterized in that** it includes a step of superposing sheets of sheet material so as to form the panel (2) of sheet material between the two holding members (4) when they are in the opened-out position.

4. The method as claimed in one of claims 1 to 3, **characterized in that** it includes, before the step of moving two opposite rims (2A, 2B) of a panel (2) of sheet material toward one another, a step of heating the panel (2) of sheet material, the panel (2) being made up of prepreg sheets.

5. The method as claimed in one of claims 1 to 4, **characterized in that** the step of moving one of two opposite rims (2A, 2B) of a panel (2) of sheet material toward the other is effected during a first phase of moving the pair of jaws (20) toward the base (25), by the action of activation stems (27) that are fixed with respect to the base (25).

6. The method as claimed in one of claims 1 to 5, **characterized in that**, in the step of simultaneously pressing the sheet material between the two jaws (20) for the one part and between the jaws (20) and the base (25) for the other part, the sheet material is pressed between two mutually parallel surfaces (22) of the jaws (20), and **in that** the sheet material is simultaneously pressed between the base (25) and two surfaces (23) perpendicular to the parallel surfaces (22) of the jaws (20).

7. The method as claimed in any one of the preceding claims, **characterized in that**, during the step of simultaneously pressing the sheet material between the two jaws (20) for the one part and between the jaws (20) and the base (25) for the other part, the sheet material is pressed against a rib (35) that is situated on the base (25) and forms an indentation (33) in the sheet material.

8. The method as claimed in any one of the preceding claims, **characterized in that**, during the step of moving a pair of jaws (20) in translation in a direction perpendicular to the juxtaposing direction (9), the jaws (20) are simultaneously moved toward one another by the cooperation of oblique edge faces (28) integral with the jaws (20) and of oblique pads (29) that are fixed with respect to the base (25).

9. The method as claimed in claim 8, **characterized in that** the jaws (20) are urged into their spaced-apart position by return springs (21).

10. A device for manufacturing a profile made of composite material having a cross section with three branches, this device having:
- a support frame (1) for a panel (2) of sheet material, this support frame (1) having:
• a rigid surround (3) having a central opening for a panel (2) of sheet material;
• two holding members (4) designed to take hold of two opposite rims (2A, 2B) of a panel (2) of sheet material;
• two levers (7), each supporting one of the holding members (4), these levers (7) being mounted on the rigid surround (3) so as to pivot between an opened-out position in which the holding members (4) are spaced apart from one another and a folded-up position in which the holding members (4) are juxtaposed in a juxtaposing direction (9);
- a mold (17) provided with two jaws (20) that are movable with respect to one another between a spaced-apart position and a closed-up position;
- a counter-mold (18) provided with a base (25);
the support frame (1) being designed to take up a working position in which it is disposed between the mold (17) and the counter-mold (18),
the mold (17) and the counter-mold (18) being movable with respect to one another, in a direction of translation that is perpendicular to the juxtaposing direction (9), between a mutual spacing position and a clamping position in which the jaws (20) of the mold (17) are in the closed-up position and are disposed so as to face the base (25) of the counter-mold (18).

11. The device as claimed in claim 10, **characterized in that** the holding members (4) are clips that are each formed by two jaw parts (5) and have a clamping means.

12. The device as claimed in either of claims 10 and 11, **characterized in that** the two jaw parts (5) are bars and have pins (6) extending between the two jaw parts (5).

13. The device as claimed in one of claims 10 to 12, **characterized in that** each lever (7) has two mutually parallel arms (10), each arm being joined to the rigid surround (3) by a pivot pin (8) and the two arms of one and the same lever being joined together by a rod (11), each holding member (4) being mounted on one of these rods (11).

14. The device as claimed in one of claims 10 to 13, **characterized in that** each holding member (4) is joined to the corresponding lever (7) by a pivot connection about an axis parallel to the juxtaposing direction (9).

15. The device as claimed in one of claims 10 to 14, **characterized in that** the rigid surround (3) has stops (36) for the levers (7) in the opened-out position.

16. The device as claimed in one of claims 10 to 15, **characterized in that** the rigid surround (3) has a central support (14) provided with adjustable stops (15) determining the folded-up position of the levers (7).

17. The device as claimed in one of claims 10 to 16, **characterized in that** the rigid surround (3) has fixing lugs (16) for fixing it to means for moving in translation.

18. The device as claimed in one of claims 10 to 17, **characterized in that** the rigid surround (3) is fixed to means for moving in translation in two directions perpendicular to the juxtaposing direction (9).

19. The device as claimed in one of claims 10 to 18, **characterized in that** the mold (17) has a mount (19) on which the two jaws (20) are mounted so as to be movable in translation and are urged into their spaced-apart position by return springs (21).

20. The device as claimed in one of claims 10 to 19, **characterized in that** the jaws (20) each have a cavity (30) for bypassing the holding members (4) when the mold (17) and the counter-mold (18) are in their clamping position.

21. The device as claimed in one of claims 10 to 20, **characterized in that** each jaw (20) has a first surface (22), the two first surfaces (22) of the jaws (20) being parallel, situated so as to face one another and designed to clamp between one another a panel (2) of sheet material when the jaws (20) are in their closed-up position and **in that** each jaw (20) has a second surface (23) perpendicular to the first surface (22), the second surfaces (23) of the two jaws (20) being designed to clamp a panel (2) of sheet material between themselves and the base (25) when the mold (17) and the counter-mold (18) are in their clamping position.

22. The device as claimed in one of claims 10 to 21, **characterized in that** the counter-mold (18) has a mount (24) on which the base (25) is mounted in a removable manner.

23. The device as claimed in one of claims 10 to 22, **characterized in that** the support frame (1) has elastic toggle means (12) that urge the levers (7) into one or the other of the opened-out and folded-up positions.

24. The device as claimed in one of claims 10 to 23, **characterized in that** the counter-mold (18) has activation stems (27) that urge the levers (7) from their opened-out position to their folded-up position when the mold (17) and the counter-mold (18) are moved in translation in the direction of their clamping position.

25. The device as claimed in one of claims 10 to 24, **characterized in that** the support frame (1) has:
- a working position in which it is disposed between the mold (17) and the counter-mold (18);
- a preparation position in which it is spaced apart from the space between the mold (17) and the counter-mold (18).
